# EUROPEAN PATENT APPLICATION

(11) **EP 4 438 576 A1**
(43) Date of publication of application: **02.10.2024**
(21) Application number: 23165997.0
(22) Date of filing: 31.03.2023
(51) Int. Cl.: C04B 18/02, F16L 59/04

(54) **GRANULES OF MICROPOROUS MATERIAL AND USE THEREOF**

(71) Applicant: PRTC NV, 2830 Tisselt (BE); Microtherm NV, 9100 Sint Niklaas (BE)
(72) Inventor: ABDUL-KADER, Oras, 9100 Sint Niklaas (BE); LIEFHOLD, Markus, 13156 Berlin (DE); VAN DER ZANDE, Ton, 9100 Sint Niklaas (BE)
(74) Representative: Etex Services NV - Etex IPSC

(57) **Abstract**

The granulate comprises a microporous powder composition comprising an insulation powder chosen from alumina and silica, an opacifier and optionally a filler, having a nominal tap density of at most 250 g/l, a granule size in the range of 0.25 to 3 mm as defined by sieving, with material having a size of at most 0.25 mm being present in an amount of at most 7 wt% based on dry weight of the granules. These granules can be used for filling a space in an apparatus and creating an insulating layer, and for bulk transport and bulk storage. Preferably, the granules are stored in the storage container to a maximum height of 3 meter, preferably maximum 2.5 meters.

## Description

### FIELD OF THE INVENTION

The invention relates to granules comprising a microporous material.

The invention further relates to use of said granules for filling one or more spaces in an apparatus and acting as insulating material therein.

### BACKGROUND OF THE INVENTION

Microporous materials are known per se, for instance from GB1580909 and US6936326, and comprise a porous silica material which generally is either a pyrogenic silica or aerogel, and in addition thereto an opacifier and optionally a reinforcing fiber and/or a filler. Microporous materials are essentially powder composition of a mix of specific powders, characterized by a very low thermal conductivity of less than 50 mW/m.K and even significantly lower. They are often used as thin insulating panel in a variety of industrial applications as well as in construction. The microporous materials may be encapsulated in a rigid or flexible envelope or even be within a barrier material which is then drawn to vacuum. The latter panel is known per se as a vacuum insulation panel or VIP. The term 'microporous material' is hereinafter used as a synonym to the term' microporous powder composition', which more precisely defines that the material is a powder mixture.

One of the forms in which microporous material is generated is a granulate. The granules offer the advantage that these can fill up a space of any complex shape and act therein as insulating material. This turns out advantageous in applications such as heaters, fuel cells and other thermal apparatus, wherein a certain part of the apparatus will operate at relatively high temperature, typically between 300 and 1000°C, while other portions of the apparatus should not heat up too much, for instance to avoid any burning by a user. The granules may here be inserted into channels, cavities and other shapes so as to enable appropriate insulation. Granules comprising microporous powder composition typically have a higher thermal conductivity than other insulation product with a microporous powder composition, which is due to the granulation process. The thermal conductivity of commercially available granulates sold by Promat under the tradename Freeflow^{™} is specified as 26 mW/m.K at a temperature of 200°C and as 36 mW/m.K at a temperature of 400°C, as measured in accordance with ISO8302. The thermal conductivity at 400°C is considered a very important parameter, since the granulates are typically used in applications wherein the operation temperature is around 400°C or can reach such temperature during use.

An additional important feature of such granules is their mechanical stability in addition to the sufficiently low thermal conductivity. When the granules disintegrate during transport or during the filling of any desired space, the material may no longer meet customer requirements and a loss of insulating performance may occur. Typically, the mechanical stability may be increased by increasing the density of the granules. However, a higher density is generally accompanied by an increase in the thermal conductivity and thus a loss in insulation performance.

The commercially available product traded under the tradename Freeflow^{™} is sold in bags of 15kg or 400 kg. Selling the material in such bags is appropriate for smaller quantities. However, it would be desired that the material can be transported and stored in bulk, i.e. using trucks or ships for transport and using silos for storage. This however requires sufficient strength.

### SUMMARY OF THE INVENTION

It is therefore a first object of the invention to provide improved granules comprising microporous powder composition, which granules have a sufficiently low thermal conductivity at temperatures up to at least 400°C, and also a sufficient mechanical strength and low amount of dust, which may indicate disintegration of the granules. The object is herein particularly to provide granules that may be transported and stored in bulk

It is another object of the invention to provide a method of filling a space in an apparatus with granules of a microporous powder composition.

It is a further object to provide an apparatus comprising the space at least partially filled with granules of the improved microporous powder composition.

According to a first aspect, the invention provides a granulate comprising a microporous powder composition comprising an insulation powder chosen from alumina and silica, an opacifier and optionally a filler, having a nominal tap density of at most 250 g/l, a granule size in the range of 0.25 to 3 mm as defined by sieving, with material having a size of at most 0.25 mm being present in an amount of at most 7 wt% based on dry weight of the granules.

According to a second aspect, the invention provides use of the granules of the invention for filling a space in an apparatus and creating an insulating layer.

According to a third aspect, the invention relates to a method of manufacturing an apparatus provided with a thermally insulating layer in a space adjacent to an element generating in use heat leading to temperatures above 200°C, and/or an element with an operating temperature of at least 200°C, said method comprising the step of filling a space adjacent to said element with granules according to the invention, so as to create a - thermally - insulating layer.

According to a further object, the invention relates to an apparatus obtained therewith.

According to again a further object, the invention relates to a method of transporting and/or storing granules of microporous powder composition in bulk, wherein the granulate of the invention is used.

In further investigations in relation to the commercially available material as sold under the tradename Freeflow^{™}, it was found that the product can be improved by lowering the density and by reducing the amount of dust, which is defined as material with a granule size of at most 250 microns, as defined by sieving. Such a product may withstand transport and/or storage in bulk.

In a preferred embodiment, the dust content is at most 6% by weight or even at most 5% by weight. Different methods may contribute to such lowering of the dust content, including addition of certain additives to the powder mixture, for instance water or waterglass, specified settings of the granulation process and post-treatment of the granules after their formation with an adhesive for the insulating powder and/or opacifier.

In an advantageous implementation, the granule size is in the range of 0.25 to 2.5 mm, as defined by sieving. This has been found to be a useful range, creating an optimum between limited dust and appropriate degree of filling and hence insulation value in the ultimate application. Preferably at least 70% by weight of the granules have a size in the range between 0.25mm and 2.00mm. In one further embodiment, the granule size is chosen in the range of 0.40 to 2.5 mm, as defined by sieving. In again a further embodiment, the granule size is chosen to be in the range of 0.50 to 2.5 mm, as defined by sieving. The minimum size range may even be 0.8 mm or 1.0 mm. Specification of the size range to a higher minimum will reduce the amount of dust. A combination with the application of a silica material for increase of mechanical strength is highly preferred. Practically, a reduced granule size range may be achieved by a separation treatment, such as by sieving, following the production of the granules with a dry granulation process. The granulates of different size may then be sold separately, wherein preferably the larger granules can be transported and/or stored in bulk and smaller granules in bags. The separation of different fractions moreover allows that any post-treatment may be optimized for a specific fraction.

In a preferred embodiment, the granulate has a nominal tap density of at most 220 g/l, preferably at most 200 g/l, even in the range of 170-190 g/l. Lowering the tap density may be achieved by adaptation of the pressure applied in the roller-compaction step of the dry granulation.

In a further embodiment, the mechanical strength of the granules is at least 160 kPa, preferably at least 165 kPa and more preferably at least 170 kPa. The mechanical strength is for instance increased by using a silicic acid or silicic acid material, for instance as part of the powder composition, or as in a post-treatment of the granules, or as a treatment of the powder composition before or during granulation. Treatments for activating the silica (and/or alumina) of the insulation powder may be used alternatively and/or additionally. Examples of such treatments are for instance heating as a post-treatment, irradiation with infrared radiation and/or activation by plasma, such as a Ar- or N2-plasma, for instance directly before granulation. All of said treatments are aimed to achieve bonding with adjacent powder particles within granules, which bonding may be chemical bonding or physical bonding. When a silicic acid material is applied, this silicic acid material may be a precursor for the material that bonds the individual particles. As is known from textbooks of silicic acid and silica, silicic acid is an oligomeric or polymeric material that can convert into silica by means of reactions between silicic acid groups Si-OH within the silica. The further polymerization of monomeric, dimeric and oligomeric silicic acid proceeds in dependence of the conditions in which the silicic acid is kept. It may be stabilized in the form of a colloidal suspension by means of stabilizing agents, including ammonium ions, metal ions and in dependence of the pH of the aqueous composition. The reaction of silicic acid may also include silicic acid groups on a surface, such as those of the individual particles of the microporous material.

According to a preferred embodiment, the silicic acid material is chosen from the group of water glass, ammonium silicate, sodium silicate, potassium silicate, sodium metasilicate, potassium metasilicate, an alkali or earth alkali salt of silicic acid, orthosilicic acid, metasilicic acid, pyrosilicic acid, disilicic acid, trisilicic acid, tetrasilicic acid, oligomeric and polymeric silicic acid, silica gel, and its mixtures. These are all silicic acids or precursors thereof that may under appropriate conditions generate polymeric silicic acid and be converted into silica.

In a preferred implementation, the silicic acid material and the aqueous composition are alkaline. Examples thereof are silicate solutions or colloidal compositions. It is believed that the pH of the silicic acid material may decrease upon contact with the microporous material. The aerogel and particularly pyrogenic silica therein are typically slightly acidic or neutral. Hence, when the aqueous composition contacts the microporous material, its alkaline pH likely decreases, which may lead to changes in the stability of the silicic acid and may lead to formation of silica, for instance to fill up pores between particles.

In one preferred implementation, the amount of fillers and the addition of any agent applied is limited to 25% by weight in the powder composition or 15% by weight added as a post-treatment.

More preferably, said addition is limited to 20% of the powder composition and 10% in a post treatment. In preliminary experiments, the thermal conductivity without any filler or agent was found to be 40 mW/m.K at 400°C and a tap density of 240 g/l. At such densities, an addition of either 20% filler or agent to the powder composition or 12% addition of an agent in a post-treatment, was found to lead to an increase of the thermal conductivity with 15-20%. Such an addition appears at a top edge of an acceptable thermal conductivity, which is 50 mW/m.K. More preferably, the thermal conductivity is at most 45 mW/m.K. Improvements in the thermal conductivity may be achieved by lowering the tap density.

In one implementation, the microporous powder composition comprises the opacifier in an amount of 10-50 wt%, the insulation powder in an amount of 40-80wt% and said filler in an amount of 0-50 wt%. This has been observed to provide an acceptable powder composition for granulation. Preferably, the powder composition is free of any reinforcing fibers. More preferably, the microporous powder composition comprises the opacifier in an amount of 20-35 wt%, the insulation powder in an amount of 40-80wt% and said filler in an amount of 0-25 wt%. Most preferably, the microporous powder composition is substantially free of any further ingredients beyond said insulation powder, said opacifier and said filler; in other words, the amounts of said three ingredients add up to at least 98% by weight, preferably at least 99% by weight, more preferably at least 99.5% by weight or even 100% by weight. Any further ingredient may be a hydrophobizing agent, a biocide, pigment and the like. Rheological agents or processing aids are not deemed necessary but cannot be excluded.

In an advantageous implementation, the insulation powder contains silica and preferably is pyrogenic silica. Pyrogenic silica is the name for pyrogenically prepared silicic acids and may include for instance silicic acid, precipitated low-alkali silicic acids, silicon dioxide aerogels. Alumina, if used, is preferably prepared analogously. Microporous powder compositions comprising pyrogenic silica may have a temperature stability up to 1000°C, and have been found appropriate for granulation. If a temperature stability to higher temperatures would be desired, alumina is to be added or used. Particle sizes of the insulation powder is for instance between 2 and 300 nanometers, with a particle size between 4 and 100 nm being more common and a particle size between 4 and 20 nm most common.

In a further implementation, the optional filler in the microporous powder composition is a material chosen from the group of water glass, precipitated and amorphous silica, calcium silicate, perlite, calcium sulphate, including gypsum materials, aluminum phosphates, borides of aluminum, titanium, zirconium, calcium, silicides such as calcium silicide and calcium aluminum silicide, basic oxides such as magnesium oxide, calcium oxide and barium oxide.

Opacifiers for use in microporous powder compositions are known, and for instance include titanium oxide, ilmenite, iron (II), iron (III) mixed oxides, chromium dioxide, zirconium oxide, manganese oxide, iron oxide, aluminium oxide, zirconium silicate, silicon carbide. Silicon carbide is a preferred opacifier.

The granulate of the present invention is very suitable for filling a space in an apparatus to create an insulating layer. Furthermore, the granulate may be transported and/or stored in bulk prior to such filling. Bulk storage can occur in a storage container such as a silo. In a preferred implementation, the bulk storage in the storage container occurs up to a maximum height of 3.0 meter, more preferably in the range of 1.5 to 2.5 meters, for instance 2 meter or 1.5-2 meter. While conventional storage containers for powders have a height of 10 or 20 meters, storage of the present low-density granules comprising microporous powder composition is better done in a container having a low maximum height. Otherwise, the pressure on granules may exceed the granule strength, leading to unforeseen damage. For transportation in bulk, corresponding height limitations are preferably followed. More preferably, use is made of a moving floor trailer. Preferably, such a trailer has a maximum volume of 65m³. In this manner, mechanical stresses during the loading and unloading process will be limited. After transport, the granules may be fed with the moving floor technology over a hopper facility into a storage container, such as a modular silo system. Granules may be unloaded from such a storage container and transported to a filling location using conveyers for powder. Preferably, use is made of a tube drag chain conveyors system. This system can additionally be used for loading a truck. The silo is much wider than high to achieve the needed storage volume and to ensure/provide the maximum storage height.

In a preferred implementation, the granules comprise at most 15% by weight of material beyond the microporous powder composition. More preferably, the granules comprise at most 10% by weight of material beyond the microporous powder composition. Any such material is most preferably incorporated in the granules in a post-treatment after the granulation or optionally directly preceding the granulation step. Such post-treatment step or treatment directly preceding granulation is advantageously carried out as a treatment with an aqueous composition, such as an aqueous solution, an emulsion in water or a colloidal dispersion. The addition of a separate excipient or binder material, such as a polymer material, prior to granulation as is common in pharmaceutical industry for granulation, is not preferred and preferably avoided.

Granulation of the microporous powder composition to granules is preferably performed by dry granulation, and more preferably using a roller-compaction step. A roller compaction step involves the use of equipment provided with at least two counter-rotating rollers, between which the powder composition is continuously compressed using a controlled compaction force. The granule size is defined in a subsequent size reduction step, for instance in a sieve mill. Particles below the size limit of a sieve screen of the sieve mill, or in a separate sieve downstream of the mill may be recirculated to the roller-compactor used in the roller-compaction step.

Optionally, a water-repellent and/or hydrophobing agent may be applied for control of humidity level. The application may be as part of the powder composition and/or as a post-treatment of the granules. Examples of agents are siloxanes, waxes and silicone resins, the latter typically provided in the form of an emulsion in water. The amount of such agent may be low, typically less than 0.5% by weight of the granules. Concentrations up to 0.3% by weight or even up to 0.2% by weight may be feasible.

It is observed for clarity that any of the embodiments discussed hereinabove, specified in dependent claims and/or apparent from the examples are deemed applicable to any of the aspects of the invention. Parameter values given in the present specification are measured in accordance with the methods specified hereinbelow, unless otherwise indicated or known per se.

### EXAMPLES

These and other aspects of the invention will be further elucidated in following examples.

### Measurement methods

Compressive strength is measured in following manner: granules are pressed into a metal die. A universal test machine of 500 kN load cell is used with cross head speed of 1mm/min. The maximum force and displacement are recorded continuously during compression and the stress is calculated therefrom.

Tap or tapped density is an increased bulk density attained after mechanically tapping a receptacle containing the sample of powder or granule. The tapped bulk density is obtained by mechanically tapping a graduated measuring cylinder or vessel containing the sample. After observing the initial untapped bulk volume (V0) and mass (m0) of the sample, the measuring cylinder or vessel is mechanically tapped, and volume or mass readings are taken until little further volume or mass change is observed. The mechanical tapping is achieved by raising the cylinder or vessel and allowing it to drop, under its own mass, a specified distance. Devices that rotate the cylinder or vessel during tapping may be preferred to minimise non-uniformity during tapping down.

Thermal conductivity is measured at equilibrium using a cell with a diameter of 110 mm and a height of 100 mm. A heat source in the form of a cylindrical heating element is hanged in the middle with controlled power supply. Insulation is present circumferential to the cylindrical heating element. At the outside, a metal can is present. The thermal conductivity of the material is obtained from the temperature difference (between hot/cold face temperatures) and heat transfer cross cylindrical section. An effective area for the heat transfer is calculated, and hot & cold face temperatures (HF, CF) are recorded. The thermal conductivity y in mW/mK is calculated as y = 0.956 x Power supply / ΔT (HF-CF) - 0.0036. This method has been developed by applicant in collaboration with the National Physical Laboratory (NPL) in the UK. The resulting values for the thermal conductivity are approximately 15% higher than those measured in accordance with ISO 8302.

Shrinkage at 1000°C during 24 hours was measured by putting the granules in a cylindrical cup in an oven at 1000°C during 24 hours, and measuring the volume shrinkage by comparing the height level before and after the heat treatment.

### Example 1

Microporous powder compositions were generating by mixing pyrogenic silica as insulation powder, and silicon carbide as opacifier in a weight ratio of 70:30. The pyrogenic silica had a specific surface area in the range of 200-250 m2/g as measured by the BET method. The powder compositions were thereafter subjected to dry granulation, which comprises a roller-compaction step using equipment provided with at least two counter-rotating rollers, between which the powder composition is continuously compressed using a controlled compaction force. The compaction force or pressure was set to achieve a desired tap density, which was 240 g/l in the examples. The bulk density was 200 g/l. The dry granulation furthermore included a size reduction step downstream of said roller-compaction step. Use was made of a sieve mill. The final sieve size in the sieve mill was set to 310 microns. The granule size was such that at least 70wt% of the granules had a size within the range 0.25mm and 2.00mm. In all examples, the granule formation was identical. Subsequently, the resulting granules were subjected to various treatments. As a reference, granules commercially available from Promat^{™} under the tradename Freeflow^{™} were tested. Results are shown in Table 1.

### Example 2

The composition of the microporous powder composition was revised in a preliminary experiment with water glass. Use was made of commercially available water glass composition, also known as sodium trisilicate solution, with formula Na₂O(SiO₂)ₓ · xH₂O or alternatively (NaOH)ₓ.(Na₂SiO₃)_{y}. zH₂O , and particularly Na₂O₇Si₃. The amount added was 20 weight%, at the expense of the amount of pyrogenic silica. Results are indicated in Table 1. It can be seen that the granule strength significantly increased. The shrinkage at 1000°C was too high and the increase in thermal conductivity was also high. This however may be addressed by lowering the amount of water glass, for instance to 5% or less rather than 20%.

**Table 1 - test results**

| Example | Reference | 1 | 2 | 3 | 4 |
|---|---|---|---|---|---|
| Filler | None | None | Water glass | None | None |
| Heat treatment | None | None | none | 400°C | 800°C |
| Tapped density (g/l) | 260 | 240 | 250 | 240 | 240 |
| Dust level | 10-15% | 7% | 6% | 7% | 7% |
| Thermal conductivity at 200°C (mW/m.K) | 30 | 30 | 32 | 31 | 31 |
| Thermal conductivity at 400°C (mW/m.K) | 42 | 40 | 47 | 40 | 40 |
| Granule strength (kPa) | 150 | 155 | 177 | 170 | 180 |
| Shrinkage at 1000°C (%) | <3 | <3 | <5 | <3 | <3 |

### Example 3

The microporous powder composition of example 1 (composition 1) was subjected to a heat treatment prior to granulation during 2 hours at 400°C and at 800°C. This was found to increase the granule strength without loss of insulation performance. Results are included in Table 1.

### Example 4

Granules without any filler made in accordance with example 1 (composition nr 1) were sprayed with an aqueous composition of water glass. Use was made of sodium-based water glass as commercially available, also known as Sodium trisilicate solution, with formula Na₂O(SiO₂)ₓ · xH₂O or alternatively (NaOH)ₓ.(Na₂SiO₃)_{y}. zH₂O , and particularly Na₂O₇Si₃.The solution was used without dilution, and sprayed onto the granules. The amount of sprayed composition was calculated based on the desired total content of water glass in the granules. After spraying, the granules were left to dry at room temperature.

As a reference, a composition of siloxane was sprayed. The composition was an aqueous emulsion based on a mixture of silane and siloxane as supplied by Wacker under tradename SILRES^{™} BS3003.

The resulting granules were thereafter tested for different parameters, including thermal conductivity at 200°C and at 400°C, dust concentration (as defined as material with a size smaller than 250 microns) and compressive strength (also referred to as granule strength). Results are found in Table 2.

**Table 2 - test results**

| Example | 1 | 5 | 6 | 7 |
|---|---|---|---|---|
| Spraying agent | None | Siloxane | Water glass | Water glass |
| Amount (wt% of granules) | - | 12% | 6% | 12% |
| Thermal conductivity at 200°C (mW/m.K) | 30 | 31 | 30 | 33 |
| Thermal conductivity at 400°C (mW/m.K) | 40 | 40 | 42 | 48 |
| Dust (wt%) | 7% | 7% | 0% | 0% |
| Granule strength (kPa) | 155 | 157 | 164 | 174 |

It can be seen in Table 2, that the spraying of water glass onto the granules increases the granule strength and additionally decreases the dust level. The thermal conductivity at 200°C for the example in which 6% water glass was sprayed, is not increased in comparison to the reference. The thermal conductivity at 400°C is somewhat increased, but still adequate. It is to be understood, that these data are based on preliminary experiments in which neither the amount of water glass nor the tap density was optimized. Based on the data from these preliminary experiments, it is apparent that the amount of water glass may be reduced to less than 10% and optionally even to less than 5% with a beneficial effect on dust removal. Furthermore, the granule strength is sufficient to reduce the tap density further down, which will lead to a reduction in thermal conductivity.

### Example 5

Granules without any filler made in accordance with example 1 (composition nr 1) were subjected to a heat treatment. The effect on granule strength and thermal conductivity was measured. Results are given in Table 3.

**Table 3 - test results**

| Example | 1 | 6 | 7 |
|---|---|---|---|
| Heat treatment | None | Siloxane | Water glass |
| Amount (wt% of granules) | - | 12% | 6% |
| Thermal conductivity at 200°C (mW/m.K) | 30 | 31 | 30 |
| Thermal conductivity at 400°C (mW/m.K) | 40 | 40 | 42 |
| Dust (wt%) | 7% | 7% | 0% |
| Granule strength (kPa) | 155 | 157 | 164 |

## Claims

1. Granulate comprising a microporous powder composition comprising an insulation powder chosen from alumina and silica, an opacifier and optionally a filler, having a nominal tap density of at most 250 g/l, a granule size in the range of 0.25 to 3 mm as defined by sieving, with material having a size of at most 0.25 mm being present in an amount of at most 7 wt% based on dry weight of the granules.

2. Granulate as claimed in claim 1, wherein the material having a size of at most 0.25 mm is present in an amount of at most 6 wt% based on dry weight of the granules, preferably at most 5 wt%.

3. Granulate as claimed in claim 1 or 2, wherein the granulate has a granule strength of at least 160 kPa, and preferably at least 165 kPa, more preferably at least 170 kPa.

4. Granulate as claimed in claim 1-3, further **characterized by** a thermal conductivity at 400°C of at most 50 mW/m.K, preferably at most 45 mW/m.K.

5. Granulate as claimed in claim 1-4, wherein the microporous powder composition comprises pyrogenic silica.

6. Granulate as claimed in claim 5, wherein the pyrogenic silica has a specific surface area from 50 to 500 m2/g as measured by BET method, preferably 100-300 m2/g.

7. Granulate as claimed in claim 1-5, wherein the microporous powder composition comprises the opacifier in an amount of 10-50 wt%, the insulation powder in an amount of 40-80wt% and said filler in an amount of 0-50 wt%.

8. Granulate as claimed in claim 6, wherein the microporous powder composition comprises the opacifier in an amount of 20-35 wt%, the insulation powder in an amount of 40-80wt% and said filler in an amount of 0-25 wt%.

9. Granulate as claimed in any of the preceding claims, wherein the shrinkage at 1000°C is less than 3% of volume.

10. Granulate as claimed in any of the preceding claims, wherein the granule size is in the range of 0.25 to 2.5 mm.

11. Granulate as claimed in any of the preceding claims, wherein the granulate has a nominal tap density of at most 220 g/l, preferably at most 200 g/l, even in the range of 170-190 g/l.

12. Granulate as claimed in any of the preceding claims, further comprising an adhesive, preferably chosen from a wax, a starch and a silicic acid based material.

13. Use of the granules as claimed in any of the preceding claims for filling a space in an apparatus and creating an insulating layer.

14. Use as claimed in claim 13, wherein the filling is preceding by unloading the granules from a storage container such as a silo, onto a conveyer.

15. Use as claimed in claim 14, wherein the granules are stored in the storage container to a maximum height of 3 meter, preferably maximum 2.5 meters.
